# EUROPÄISCHE PATENTSCHRIFT

(11) **EP 2 576 245 B1**
(45) Veröffentlichungstag und Bekanntmachung des Hinweises auf die Patenterteilung: **12.10.2016**
(21) Anmeldenummer: 11713806.5
(22) Anmeldetag: 12.04.2011
(51) Int. Cl.: B60C 9/00, D02G 3/48, D01F 6/62, D01F 13/04

(54) **VERSTÄRKUNGSKORD, INSBESONDERE FÜR EINE KARKASSE ODER EINEN GÜRTEL EINES LUFTREIFENS**
REINFORCEMENT CORD, IN PARTICULAR FOR A CARCASS OR A BELT OF A PNEUMATIC TYRE
CORDE DE RENFORCEMENT, EN PARTICULIER POUR UNE CARCASSE OU UNE CEINTURE D'UN PNEUMATIQUE

(30) Priorität: 27.05.2010 DE 102010017107
(43) Veröffentlichungstag der Anmeldung: 10.04.2013
(73) Patentinhaber: Continental Reifen Deutschland GmbH, 30165 Hannover (DE)
(72) Erfinder: CAROLE, Justine, 31535 Scharrel (DE); KRÜGER, Jörn, 30926 Seelze (DE)
(74) Vertreter: Finger, Karsten
(86) Internationale Anmeldenummer: PCT/EP2011/055675
(87) Internationale Veröffentlichungsnummer: WO 2011/147635

(56) Entgegenhaltungen:
- EP-A1- 2 113 397
- DE-A1-102007 025 490
- JP-A- 2004 100 087
- JP-A- 2004 176 205
- JP-A- 2006 022 435

## Beschreibung

Die Erfindung betrifft einen Verstärkungskord für elastomere Erzeugnisse, insbesondere für eine Karkasslage oder eine Gürtelbandage eines Fahrzeugluftreifens, bestehend aus wenigstens zwei Garnen aus nicht-metallischen Materialien, die miteinander endverdreht sind, wobei wenigstens ein Garn aus dem Material PET besteht und wobei das PET recyceltes PET ist. Ferner betrifft die Erfindung einen Fahrzeugluftreifen, enthaltend diese Verstärkungskorde in einer Karkasslage und/oder in einer Gürtelbandage. Verstärkungskorde als Festigkeitsträger für elastomere Erzeugnisse, insbesondere für eine Karkasslage oder eine Gürtelbandage von Fahrzeugluftreifen, sind dem Fachmann in Aufbau und Material in verschiedensten Ausführungen bekannt. Die Verstärkungskorde werden während der Herstellung in eine Kautschukmischung eingebettet, um als gummierte Festigkeitsträgerlage im elastomeren Erzeugnis eingesetzt werden zu können. Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, zwischen Gürtel und Laufstreifen eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Korden, die in einer Kautschukmischung eingebettet sind. Die Gürtelbandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Reifenaufbauvorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Somit soll der Festigkeitsträger, welcher in der Gürtelbandage eingesetzt ist, vorteilhafterweise diese Erhebung erlauben, aber ebenfalls während der Vulkanisation des Reifens ein geeignetes Schrumpfverhalten aufweisen, um zumindest die Gürtelränder niederzudrücken.

Die Karkasslage von Fahrzeugluftreifen weist beispielsweise bei PKW-Radialreifen Verstärkungskorde der meist einlagigen Karkasslage mit Verlauf in radialer Richtung auf. Die Verstärkungskorde in Karkasslagen müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens und hat die Funktion einer Festigkeitslage. Der radiale Verlauf der Verstärkungskorde erhöht die Festigkeitseigenschaften der Lage, erhöht insbesondere die Tragfähigkeit und die Komfortmerkmale des Reifens wie Einfederung und Fahreigenschaften.

Bisher werden als Materialien für Festigkeitsträger in elastomeren Erzeugnissen, insbesondere in Karkasslagen oder in Gürtelbandagen von Fahrzeugluftreifen einerseits primär (unmittelbar) auf fossilen Rohstoffen (auf Rohöl) basierende textile Festigkeitsträger, wie beispielsweise PET (Polyethylenterephthalat), Aramid und Nylon oder Hybridkorde aus deren Garnen eingesetzt. Andererseits ist es bekannt, nichtrohölbasierte textile Festigkeitsträger aus Viskose, wie beispielsweise Rayon oder Lyocell einzusetzen.

Aus der Offenlegungsschrift JP 2004100087 A ist ein Verstärkungskord eines Fahrzeugluftreifens aus Fasern aus recyceltem PET bekannt. Hierbei wird offenbart, wie die Eigenschaften der Faser und des Produktes durch den Herstellungsprozess und die Materialzusammensetzung der Faser aus recyceltem PET beeinflusst werden.

Hierdurch kann ein üblicher PET-Verstärkungskord durch einen Verstärkungskord, welcher komplett aus recyceltem PET besteht, ersetzt werden. Je nach Wahl der Produktionsparameter weist dieser Verstärkungskord die gleichen Eigenschaften wie ein üblicher PET-Verstärkungskord (regular bzw. HMLS high modulus low shrinkage) auf.

Entsprechendes gilt für die Offenbarung der JP 2004176205 A. Diese betrifft Fasern aus recyceltem PET sowie industrielle Produkte wie Seile aus solchen Fasern.

Aus der JP 2006022435 A ist ein schwer entflammbarer Verstärkungskord eines Fahrzeugluftreifens bekannt. Der schwer entflammbare Verstärkungskord weist schwer entflammbare Fasern auf, welche recyceltes PET sowie ein PET-Harz beinhaltend Phosphor enthalten. Weiter weist das Faserprodukt Fasern aus einem Polyester, insbesondere aus PET, welches kein recyceltes Polyester enthält, auf.

Es ist ebenfalls bekannt, Hybridkorde, bei denen ein Garn aus einem nicht-rohölbasierten Material und ein anderes Garn aus einem rohölbasierten Materialien besteht, als Festigkeitsträger in Festigkeitsträgerlagen in elastomeren Produkten einzusetzen. Nachteilig an Naturfasern, also an nicht-rohölbasierten Materialien als Material für textile Festigkeitsträger ist, dass diese keine endlose Faserstruktur und eine stark schwankende Faserqualität aufweisen.

Zudem erschwert das fehlende Schrumpfverhalten die spezielle Anwendung von Rayon als Festigkeitsträger in der Gürtelbandage. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Die Entwicklung geht dahin, umweltfreundliche, ressourcenschonende, auf primäre fossile Rohstoffe verzichtende Elastomerprodukte, wie Fahrzeugluftreifen zu entwickeln und einzusetzen.

Der Begriff "pumär(e)" wird in der Bedeutung von "unmittelbar" verwendet.

Der vorliegenden Erfindung liegt die Aufgabe zu Grunde, einen Verstärkungskord für elastomere Erzeugnisse, insbesondere für einen Fahrzeugluftreifen bereitzustellen, der aus umweltfreundlichem und ressourcenschonendem Material besteht. Zudem soll der Verstärkungskord eine gleichbleibende Produktqualität aufweisen und dessen Eigenschaften definiert eingestellt werden können..

Die Aufgabe wird gelöst, indem wenigstens ein Garn des Kordes nicht aus recyceltem PET, sondern aus PA wie vorzugsweise PA6.6, PA6, aus Aramid, Arselon, PEEK oder POK, bevorzugt aus Viskose oder Naturfasern, besteht.

Erfindungswesentlich ist, dass wenigstens ein Garn des Festigkeitsträgers aus recyceltem PET besteht. Recyceltes PET wird nicht primär (unmittelbar) aus fossilen Rohstoffen gewonnen, sondern wird bevorzugt zu 100% aus bereits verwendetem PET, wie z.B. PET-Getränkeflaschen, zurückgewonnen. Diese Wiederverwendung von bereits verwendetem PET als Material für Festigkeitsträger von Elastomerprodukten ist umweltfreundlich und ressourcenschonend. Zudem weist recyceltes PET ebenfalls wie unmittelbar aus fossilen Rohstoffen gewonnenes PET eine gleichbleibende Qualität auf. Somit kann eine gleichbleibende Produktqualität sichergestellt werden.

Der Verstärkungskord ist ein Hybridkord, bei dem wenigstens ein Garn des Kordes aus einem anderen Material als aus recyceltem PET besteht, nämlich aus PA wie vorzugsweise PA6.6, PA6, Aramid, Arselon, PEEK oder POK, bevorzugt aus Viskose oder Naturfasern, während das (die) übrige(n) Garn (e) aus recyceltem PET bestehen. Der Verstärkungskord ist somit teilweise umweltfreundlich und ressourcenschonend gestaltet und bietet als weiteren Vorteil die Möglichkeit der definierten Einstellung des Verstärkungskordes durch eine gezielte Materialauswahl des wenigstens einen Garnes.

Um ein höheres Schrumpfverhalten des Hybridkordes zu erhalten, ist das wenigstens eine Garn aus PA. Dieses ist insbesondere für die Verwendung dieses Hybridkordes in der Gürtelbandage eines PKW-Reifens von Vorteil.

Um einen höheren Modul des Hybridkordes zu erhalten, ist das wenigstens eine Garn aus Aramid. Dieses ist insbesondere für die Verwendung dieses Hybridkordes in der Gürtelbandage von UHP- (Ultra High Performance-) Reifen von Vorteil.

Um einen stabilen Hybridkord weitgehend ohne Schrumpf zu erhalten, ist das wenigstens eine Garn aus Rayon. Dieses ist insbesondere für die Verwendung dieses Hybridkordes in der Karkasse von PKW-Reifen und für das highspeed-Verhalten von PKW-Reifen von Vorteil.

Einerseits kann das wenigstens eine Garn der vorgenannten anderen Ausführungsform zur Einstellung bestimmter Eigenschaften aus PA (wie beispielsweise PA6.6, PA6), Aramid, Arselon, PEEK oder POK bestehen.

Andererseits kann das wenigstens eine Garn der vorgenannten anderen Ausführungsform aus Viskose, bevorzugt Rayon oder Lyocell oder aus Naturfasern bestehen. Der gesamte Hybridkord ist aus nicht-primär-rohölbasierten Materialien hergestellt und kann durch geeignete Materialauswahl der Garne definiert in seinen Eigenschaften eingestellt sein.

Insbesondere der recycelte PET-Garne aufweisende Hybridkord eignet sich besonders als Festigkeitsträger der Gürtelbandage. Denn das recycelte PET weist ein im Vergleich zu Rayon vorteilhaftes gutes Schrumpfverhalten während der Vulkanisation auf und zeichnet sich durch eine geringe Wasseraufnahme aus. Im Vergleich zu PA weist das recycelte PET ein vorteilhaftes Flatspot-Verhalten auf, indem das recycelte PET nicht zum Flatspotting neigt. Das/die übrigen Garne sind vorzugsweise aus PA und verbessern zusätzlich das highspeed-Verhalten des PKW-Reifens.

## Patentansprüche

1. Verstärkungskord für elastomere Erzeugnisse, insbesondere für eine Karkasslage und/oder für eine Gürtelbandage eines Fahrzeugluftreifens, bestehend aus wenigstens zwei Garnen aus nicht-metallischen Materialien, die miteinander endverdreht sind, wobei wenigstens ein Garn aus dem Material PET besteht und wobei das PET recyceltes PET ist,
**dadurch gekennzeichnet, dass**
wenigstens ein Garn des Kordes nicht aus recyceltem PET, sondern aus PA wie vorzugsweise PA6.6, PA6, Aramid, Arselon, PEEK oder POK, bevorzugt aus Viskose oder Naturfasern, besteht.

2. Verstärkungskord nach einem der vorangehenden Ansprüche,
**dadurch gekennzeichnet, dass** der Titer eines jeden Garnes zwischen 250 und 5000 dTex beträgt und dass die Verzwirnung der vorverdrehten Materialien zwischen 100 und 600 t/m beträgt.

3. Fahrzeugluftreifen, **dadurch gekennzeichnet, dass** dieser einen Verstärkungskord nach einem der Ansprüche 1 bis 2 aufweist.

## Claims

1. Reinforcement cord for elastomeric articles of manufacture, in particular for a carcase ply and/or for a belt bandage of a pneumatic vehicle tyre, consisting of two or more mutually cable-twisted yarns of non-metallic materials, wherein at least one yarn consists of the material PET and wherein the PET is recycled PET,
**characterized in that**
at least one yarn of the cord consists not of recycled PET, but of PA such as preferably PA6.6, PA6, aramid, Arselon, PEEK or POK, more preferably of viscose or natural fibres.

2. Reinforcement cord according to any preceding claim,
**characterized in that** the linear density of every yarn is between 250 and 5000 dtex and **in that** the twist level of the single-twisted materials is between 100 and 600 t/m.

3. Pneumatic vehicle tyre, **characterized in that** it includes a reinforcement cord according to either of Claims 1 and 2.

## Revendications

1. Corde de renforcement pour produits élastomères, en particulier pour une couche de carcasse et/ou un bandage de ceinture d'un pneumatique de véhicule, constituée d'au moins deux fils en matériaux non métalliques qui sont torsadés les uns aux autres aux extrémités, au moins un fil étant en PET et le PET étant du PET recyclé,
**caractérisée en ce qu'**au moins un fil de la corde ne se compose pas de PET recyclé, mais de PA, tel que de préférence du PA6.6, PA6, de l'aramide, de l'Arselon, du PEEK ou du POK, de préférence de viscose ou de fibres naturelles.

2. Corde de renforcement selon l'une des revendications précédentes,
**caractérisée en ce que** le titre de chaque fil est compris entre 250 et 5000 dTex et **en ce que** la torsion des matériaux préalablement torsadés est comprise entre 100 et 600 t/m.

3. Pneumatique de véhicule, **caractérisé en ce qu'**il présente une corde de renforcement selon l'une quelconque des revendications 1 et 2.
